# FASCICULE DE BREVET EUROPEEN

(11) **EP 3 018 109 B1**
(45) Date de publication et mention de la délivrance du brevet: **30.11.2016**
(21) Numéro de dépôt: 15191432.2
(22) Date de dépôt: 26.10.2015
(51) Int. Cl.: C04B 28/06

(54) **MÉLANGE HYDRAULIQUE COMPRENANT DES GRANULATS D'ORIGINE VÉGÉTALE ET PROCÉDÉ DE PRÉPARATION DE BÉTON OU MORTIER À PARTIR DUDIT MÉLANGE**
HYDRAULISCHE MISCHUNG, DIE GRANULAT PFLANZLICHEN URSPRUNGS UMFASST, UND BETON- ODER MÖRTELHERSTELLUNGSVERFAHREN MIT DIESER MISCHUNG
HYDRAULIC MIXTURE COMPRISING AGGREGATES OF PLANT ORIGIN AND METHOD FOR PREPARING CONCRETE OR MORTAR FROM SAID MIXTURE

(30) Priorité: 04.11.2014 FR 1460604
(43) Date de publication de la demande: 11.05.2016
(73) Titulaire: ITALCEMENTI S.p.A., 24121 Bergamo (IT)
(72) Inventeur: HERVE, Stephen, 93140 BONDY (FR); SHINK, Mélanie, 78000 VERSAILLES (FR)
(74) Mandataire: Le Cloirec, Claudine

(56) Documents cités:
- EP-A1- 0 703 880
- EP-A1- 2 154 117
- EP-A1- 2 177 489
- WO-A2-97/39054
- DE-C1- 10 046 387
- FR-A1- 2 705 336
- FR-A1- 3 004 711
- FR-A2- 2 662 156
- US-A- 2 553 618

## Description

La présente invention a pour domaine les bétons et éléments constructifs en béton, à base d'un liant hydraulique, mélange de ciment Portland et de ciment sulfo-alumineux, et contenant des granulats végétaux.

L'utilisation de granulats végétaux dans la réalisation de bétons présente de nombreux avantages. En effet, les granulats végétaux sont une matière première renouvelable et ils permettent dans de nombreux cas la valorisation de déchets issus de la biomasse. Contrairement aux granulats minéraux, les granulats végétaux ne nécessitent pas l'exploitation de carrières impactant l'environnement. De plus, les granulats végétaux ont une faible masse volumique ce qui permet d'envisager la mise au point de matériaux légers et isolants caractérisés par un comportement hygrothermique.

Cependant, l'utilisation de ces granulats végétaux est difficile à mettre en oeuvre. L'eau de gâchage d'un mélange contenant du ciment est fortement basique. Dans ces conditions, les granulats végétaux relâchent dans l'eau des composés organiques qui interagissent avec la formation des silicates de calcium hydratés, principaux hydrates responsables de la prise et du durcissement du ciment Portland. Ainsi la prise du ciment est très lente ou inexistante. Le démoulage du béton à base de ciment et de granulats végétaux est retardé, ou même impossible. Dans certains cas, un durcissement de surface par carbonatation est observé alors que le liant à coeur n'a pas fait prise. Un autre inconvénient des granulats végétaux est leur très forte absorption d'eau.

Ce problème est connu de l'homme du métier et des solutions telles que la pré-minéralisation des granulats végétaux ou l'utilisation d'un accélérateur de prise ont été proposées pour tenter de le résoudre. Par exemple le document EP 1 307 411 (Höhn) décrit l'utilisation de ciment Portland, d'un filler non pouzzolanique et de granulats végétaux pré-minéralisés. Le brevet FR 2 772 745 (Lafarge) décrit également le pré-enrobage de particules de bois par une composition de ciment avant de pouvoir l'utiliser dans un béton. Par ailleurs FR 2 927 623 (Imerys) préconise l'utilisation d'un accélérateur de prise de type ciment alumineux.

Malheureusement la pré-minéralisation complexifie le procédé tout en augmentant la quantité de ciment utilisée, et donc le coût du produit final. Quant aux accélérateurs de prise ils sont difficiles à doser, peuvent réduire les performances mécaniques du produit obtenu (notamment la résistance à la compression) et augmentent le coût du produit final.

Il existe donc un besoin d'un mélange hydraulique permettant d'obtenir des bétons contenant des granulats végétaux de manière simple, c'est-à-dire sans prétraitement complexe, et à moindre coût.

Le brevet EP 0 703 880 (Vimpex-TCD) décrit une composition cimentaire contenant du ciment Portland, au maximum 30 % de Yeelimite (phase minéralogique C4A3$, en notation cimentière) et de l'anhydrite, mise en oeuvre avec des particules de bois ou des fibres de Miscanthus pour la réalisation d'élément moulés. Globalement le mélange hydraulique enseigné par EP 0 703 880 comprend une forte quantité de liant par rapport aux granulats, ou par rapport à l'eau. En d'autres termes son coût est élevé.

De manière surprenante, les inventeurs de la présente demande ont découvert qu'il est possible d'obtenir un matériau à base de liant hydraulique et d'un mélange de granulats végétaux et éventuellement minéraux, présentant une résistance à la compression plus élevée que celle décrite dans l'art antérieur, le tout à un moindre coût et sans prétraitement des granulats végétaux.

La présente invention a pour but de proposer un mélange hydraulique permettant d'obtenir des bétons ou mortiers contenant des granulats végétaux, sans que le temps de prise dudit mélange hydraulique n'handicape le décoffrage, ou le démoulage des bétons ainsi obtenus.

La présente invention a encore pour but de proposer un mélange hydraulique permettant d'obtenir des bétons ou mortiers contenant des granulats végétaux, avec une hydratation à coeur du matériau final, sans que l'absorption d'eau des granulats végétaux ne vienne perturber les réactions d'hydratation.

La présente invention a également pour but de proposer un mélange hydraulique permettant d'obtenir des bétons ou mortiers ayant une masse volumique sèche maximale inférieure à 1200 kg/m³, et contenant des granulats végétaux, lesdits bétons ayant une résistance à la compression à 28 jours supérieure à 1,5 MPa.

Un autre but de la présente invention est, dans le cadre de la réalisation de béton ou mortier contenant des granulats végétaux, de proposer un mélange hydraulique permettant d'éviter la pré-minéralisation desdits granulats végétaux.

Un autre but de la présente invention est de proposer un mélange hydraulique permettant de réaliser des bétons ou mortiers contenant des granulats végétaux et le moins de ciment possible.

Ces objectifs sont atteints grâce au mélange hydraulique objet de la présente invention.

A cet effet la présente invention a pour objet un mélange hydraulique pour l'obtention de béton ou mortier, contenant un liant hydraulique minéral, un mélange de granulats et de l'eau, caractérisé en ce que ledit liant hydraulique minéral est un mélange comprenant du ciment Portland et du ciment sulfo-alumineux, le ciment sulfo-alumineux contenant les phases minéralogiques suivantes, exprimées en pourcentages massiques par rapport à la masse totale du liant sulfo-alumineux :
- Yeelimite, ou C4A3$, supérieure à 40 %, notamment de 50 à 90 %, préférentiellement de 60 à 70 %, et
- Bélite, ou C2S, inférieure à 40 %, notamment de 5 à 30 %, préférentiellement de 10 à 15 %.
et en ce que la totalité ou au moins une partie du mélange de granulats est d'origine végétale.

Par mélange hydraulique on désigne une composition qui durcit et fait prise en présence d'eau, par hydratation d'un liant hydraulique minéral. Dans le cadre de la présente invention le liant hydraulique minéral est un mélange comprenant deux ciments distincts : ciment Portland et ciment sulfo-alumineux.

La combinaison de ces deux types de ciments est importante car chaque ciment apporte un effet particulier. Le ciment sulfo-alumineux permet d'obtenir une prise rapide et ainsi de contrebalancer les problèmes de retard de prise mais également d'éviter qu'une partie trop importante de l'eau nécessaire à l'hydratation ne soit piégée par les granulats végétaux. Le ciment Portland permet d'assurer les propriétés de résistance à long terme du produit final en assurant le développement des propriétés mécaniques.

En notation cimentière la phase minéralogique Yeelimite s'écrit C4A3$, et la Bélite s'écrit C2S. Cette proportion de Yeelimite est typique d'un ciment sulfo-alumineux, il ne peut s'agir d'un ciment alumineux.

Préférentiellement le mélange hydraulique selon la présente invention ne contient pas de liants minéraux appartenant aux familles des ciments sulfo-bélitiques ni des ciments alumineux.

Le terme granulats désigne des particules solides non pouzzolaniques, c'est-à-dire ne contribuant pas au développement des résistances mécaniques du matériau final. On distingue les granulats végétaux, issus de la biomasse, des granulats minéraux, extraits de carrières ou de gisements. Les granulats minéraux ayant un diamètre inférieur à 4 mm sont communément désignés sous le nom de « sable ». Des granulats ayant un diamètre supérieur à 4 mm sont communément désignés sous le nom de « gravillons ».
Par masse de granulats secs, on entend la masse des granulats telle quelle serait si les granulats étaient séchés à l'étuve jusqu'à masse constante de manière à en retirer toute l'eau absorbée.

Mortier et béton sont des matériaux durcissables ayant tous deux une composition cimentaire selon la présente invention mais se distinguant par le diamètre des granulats qui les constituent. Un béton contient du sable et des gravillons, alors qu'un mortier ne contient que du sable.
Mortier et béton sont les produits finaux obtenus lors de la mise en oeuvre de la présente invention.

Une grande quantité de granulats est intéressante économiquement car le coût de production des granulats est peu élevé comparativement à celui des ciments ; cependant une trop grande proportion de granulats par rapport aux ciments affecte négativement la résistance du matériau final. Préférentiellement le rapport massique du mélange de granulats secs par rapport au liant hydraulique minéral est supérieur ou égal à 0,5 et, de préférence, inférieur ou égal à 3.

Les ciments Portland selon la présente invention correspondent à tous les ciments contenant du clinker de type Portland, c'est-à-dire un clinker contenant la phase minéralogique Alite, ou C3S en notation cimentière, en proportion importante. Par proportion importante on désigne plus de 40 %, notamment plus de 50 %, préférentiellement plus de 60 %, les pourcentages étant exprimés en masse d'Alite par rapport à la masse de clinker Portland.

Ce clinker Portland peut être combiné à différentes additions pouzzolaniques, telles que notamment les laitiers de haut fourneau, les cendres volantes, les fumées de silice, les pouzzolanes naturelles, les schistes calcinés, les argiles calcinées, les calcaires broyés, pour donner les ciments composés correspondant aux dénominations CEM II, CEM III, CEM IV, CEM V bien connues de l'homme du métier. Le clinker Portland mélangé à une faible proportion (inférieure ou égale à 7 % massique, généralement inférieure à 5 % massique) de sulfate de calcium, par exemple du gypse, donne le ciment dénommé CEM I.

Il est également possible d'obtenir des liants équivalents en combinant directement un CEM I ou un CEM II avec une ou plusieurs additions pouzzolaniques telles qu'enseignées précédemment. Ce type de liants équivalents est décrit dans la norme Européenne EN 206-1.

Dans le cadre de la présente invention tous les ciments Portland CEM I à V avec éventuellement une ou plusieurs additions pouzzolaniques peuvent être mis en oeuvre, mais les inventeurs ont une préférence pour les ciments de type CEM I et CEM II et les liants équivalents obtenus par combinaison d'un CEM I ou CEM II avec une ou plusieurs additions pouzzolaniques, notamment les ciments CEM I et CEM II, plus particulièrement pour le ciment de type CEM I.

Selon un mode de réalisation avantageux, le mélange hydraulique selon la présente invention est caractérisé en ce que le rapport massique entre le ciment Portland et le ciment sulfo-alumineux est compris entre 1 et 0,1, notamment entre 0,5 et 0,1, préférentiellement entre 0,33 et 0,1.

En effet, il convient de maintenir un équilibre entre les deux types de ciments afin de combiner correctement leurs effets propres. Les inventeurs ont observé de façon inattendue, qu'une proportion de ciment sulfo-alumineux supérieure ou égale au ciment Portland permet d'obtenir les effets recherchés, à savoir une hydratation rapide du liant dans tout le matériau et des propriétés mécaniques satisfaisantes à long terme. Des résultats satisfaisants sont obtenus avec une forte proportion de liant sulfo-alumineux mais il faut cependant conserver une faible proportion de ciment Portland sous peine de voir les propriétés mécaniques à long terme décroître.

Selon un mode de réalisation avantageux, dans le mélange hydraulique, selon la présente invention, le rapport massique entre l'eau et le liant hydraulique minéral est supérieur ou égal à 0,7 et, de préférence, compris entre 0,7 et 1,5, notamment entre 0,8 et 1,3, préférentiellement encore entre 0,9 et 1,1.

II convient en effet d'apporter suffisamment d'eau pour que les réactions d'hydratation du liant hydraulique minéral soient complètes tout en tenant compte de l'absorption d'eau du granulat d'origine végétale. Ceci explique le rapport eau / liant qui peut être plus élevé dans le cadre de la présente invention que dans un béton courant où il est traditionnellement de l'ordre de 0,5. Cependant une trop grande proportion d'eau pourrait compromettre les résistances mécaniques du produit final.

Selon un mode de réalisation particulièrement avantageux de la présente invention, le granulat d'origine végétale est sélectionné parmi des sources telles que le bois, le chanvre, le lin, le miscanthus, le sorgho, la paille, les balles de riz, ou un mélange de ceux-ci, préférentiellement le granulat d'origine végétale provient du bois, du chanvre, du miscanthus, ou un mélange de ceux-ci.

II est possible d'envisager un traitement des fibres végétales mises en oeuvres dans le cadre de la présente invention afin de modifier leurs propriétés mécaniques ou chimiques ; par exemple afin d'en réduire l'absorption d'eau, le relargage de certains composés chimiques, ou encore d'augmenter l'adhérence du liant hydraulique minéral sur lesdites fibres.

Les granulats d'origine végétale mis en oeuvre dans le cadre de la présente invention peuvent avoir n'importe quelle forme, telles que des boulettes, des copeaux, des plaquettes ou des fibres. Généralement la forme des fibres est dictée par les procédés industriels d'obtention des dites fibres. A titre d'exemple citons des fibres allongées plus ou moins épaisses, avec une longueur L et une épaisseur D (L pouvant être inférieur ou égal à 50 mm environ, encore préférentiellement inférieur ou égal à 30 mm, notamment inférieur ou égal à 20 mm, le rapport L/D pouvant être supérieur à 4, préférentiellement supérieur à 8).

Selon un mode de réalisation particulier le mélange de granulats du mélange hydraulique objet de la présente invention comprend des granulats d'origine végétale et des granulats d'origine minérale, le rapport massique à l'état sec entre les granulats d'origine végétale et les granulats d'origine minérale étant avantageusement compris entre 0,1 et 0,6, notamment entre 0,2 et 0,5.

De préférence, la proportion massique des granulats d'origine végétale dans la fraction solide dudit mélange est avantageusement supérieure à 10 %, de préférence supérieure à 12 %, de préférence encore supérieure à 14 %.

La résistance à la compression du produit final dépend en grande partie de la résistance des granulats qui le composent et du compactage. Si les granulats sont fragiles, comme par exemple des granulats d'origine végétale, le produit final risque de ne pas présenter une résistance mécanique suffisante. Les granulats minéraux offrent généralement une résistance satisfaisante, mais ils ne présentent pas les propriétés d'isolation, de légèreté, et le caractère renouvelable des granulats d'origine végétale. Le produit doit également être compact. Un mauvais compactage laissera place à des vides de compaction qui affaibliront le produit final. II convient donc de trouver un juste équilibre entre ces deux types de granulats afin de combiner leurs propriétés avantageuses.

Néanmoins, dans le cadre d'un matériau final ne nécessitant pas une résistance particulièrement élevée, ou dans le cas d'un granulat d'origine végétale suffisamment résistant, il est possible d'envisager une mise en oeuvre de la présente invention avec un mélange de granulats composé exclusivement de granulats d'origine végétale.

Afin d'obtenir un matériau final suffisamment résistant il faut une quantité minimale de liant hydraulique minéral assurant la cohésion entre les granulats, cependant une quantité trop importante de liant ne présenterait aucun intérêt économique en raison du coût de production nettement plus élevé des ciments composant le liant hydraulique. Selon un mode de réalisation avantageux, le rapport massique entre les granulats d'origine végétale à l'état sec et le liant hydraulique minéral est compris entre 0,3 et 0,7, notamment entre 0,4 et 0,6, préférentiellement entre 0,45 et 0,55.

Le ciment sulfo-alumineux permet une prise rapide du mélange hydraulique grâce à une cinétique d'hydratation rapide. Lors de son hydratation, le ciment sulfo-alumineux va entrer en compétition avec les granulats d'origine végétale qui absorbent également de l'eau. Il est donc préférable que le mélange selon la présente invention contienne un minimum de ciment sulfo-alumineux par rapport au granulat d'origine végétale afin de s'assurer une prise du mélange hydraulique. Par contre, au-delà d'un certain seuil, des considérations de coût des ciments et granulats font qu'il peut ne plus être avantageux d'augmenter la proportion de ciment sulfo-alumineux. Selon un mode de réalisation avantageux de la présente invention le rapport massique entre les granulats d'origine végétale à l'état sec et le ciment sulfo-alumineux est compris entre 0,4 et 1,5, notamment entre 0,45 et 1,3, préférentiellement entre 0,5 et 1,1.

Selon un autre mode de réalisation avantageux le mélange hydraulique selon la présente invention est caractérisé en ce qu'il contient un ou plusieurs adjuvants choisi parmi les superplastifiants, les accélérateurs de prise ou de durcissement, les agents viscosants, les entraîneurs d'air.

L'utilisation d'adjuvant permet de contrôler plus précisément les caractéristiques du produit final mais également les propriétés rhéologiques du mélange hydraulique selon la présente invention lors de sa mise en oeuvre. Il est néanmoins possible d'envisager une mise en oeuvre de la présente invention avec une composition hydraulique ne contenant pas d'adjuvants, par exemple pour des raisons économiques.

Il est également possible d'envisager une mise en oeuvre de la présente invention avec une composition hydraulique ne contenant pas d'adjuvants accélérateurs de prise et de durcissement ; notamment des accélérateurs dont la composition est à base d'un des produits suivants : chlorure de calcium, formate de calcium, nitrite de calcium, nitrate de calcium, thiocyanate de calcium, thiosulfate de calcium, thiocyanate de sodium, composés organiques de type alkanolamine tel que mono-, di- ou tri-éthalonamine, triisopropanolamine, nanoparticules de C-S-H, résine de type EDTA (acide éthylène diamine tétra acétique).
En effet grâce à sa cinétique d'hydratation rapide le ciment sulfo-alumineux peut remplir ce rôle d'accélérateur de prise.

Selon un mode de réalisation alternatif, la présente invention a également pour objet des blocs béton pour construction obtenu à partir d'un mélange hydraulique tel que défini précédemment. Par bloc béton on désigne tout élément de construction produit, notamment en série, à partir d'une composition hydraulique telle que le mélange hydraulique objet de la présente invention. Plus précisément un bloc béton selon la présente invention peut désigner un parpaing, un pavé, un cube, un entrevous ou tout bloc ou plaque de n'importe quelles dimensions.

La présente invention a également pour objet un procédé de préparation d'un béton ou d'un mortier à l'aide d'un mélange hydraulique tel que décrit précédemment et caractérisé en ce qu'il comprend les étapes successives suivantes :
1) Malaxage du mélange de granulats pour l'homogénéiser,
2) Humidification du mélange de granulats par ajout d'une partie de l'eau,
3) Ajout du liant hydraulique minéral,
4) Ajout du reste de l'eau et d'éventuels adjuvants.

Toutes les étapes se font en poursuivant le malaxage. Il est néanmoins possible de marquer des pauses dans le malaxage entre deux étapes afin de laisser le mélange reposer avant de passer à l'étape suivante.

La deuxième étape est l'humidification du mélange de granulats avant l'introduction du liant hydraulique minéral. Elle permet de s'assurer que le granulat d'origine végétale est saturé en eau et ne viendra pas ensuite perturber l'hydratation du liant hydraulique minéral. Cette étape d'humidification permet également une adhésion des particules dudit liant hydraulique minéral à la surface des granulats. De plus le liant hydraulique minéral adhérant à la surface des granulats d'origine végétale commence à s'hydrater en récupérant ainsi une partie de l'eau absorbée par le granulat d'origine végétale.

L'absorption d'eau par les granulats d'origine végétale est nulle ou très limitée lors de l'ajout de la portion d'eau en quatrième étape car les granulats d'origine végétale sont déjà suffisamment imprégnés d'eau. Ainsi l'eau ajoutée dans cette quatrième étape est disponible pour l'hydratation du liant hydraulique minéral.

Le volume d'eau ajouté lors de l'étape 2) est supérieur ou égal à 50 % du volume total d'eau introduit au cours du procédé.
Le volume d'eau ajouté lors de l'étape 4) est inférieur ou égal à 50 % du volume total d'eau introduit au cours du procédé.
Le volume d'eau ajouté lors de l'étape 4) est supérieur ou égal à 10 % du volume total d'eau introduit au cours du procédé.

La présente invention a également pour objet l'utilisation d'un mélange hydraulique tel que décrit précédemment, pour la réalisation d'un béton, ou d'un mortier, léger, isolant, contenant une partie de granulats d'origine végétale, et ayant une résistance à la compression, à 28 jours, supérieure à 1,5 MPa, notamment supérieure à 2 MPa, préférentiellement supérieure à 3 MPa.

Par béton, ou mortier, léger on désigne un béton ou un mortier dont la masse volumique sèche à 28 jours est inférieure à 1200 kg/m³, notamment inférieure à 1000 kg/m³, préférentiellement inférieure à 800 kg/m³.

Par béton, ou mortier, isolant on désigne un béton ou un mortier dont la conductivité thermique est inférieure à 0,30 W/m.K, notamment inférieure à 0,25 W/m.K, préférentiellement inférieure à 0,20 W/m.K.

Dans un mode de réalisation préféré la présente invention a pour objet l'utilisation d'un mélange hydraulique tel que décrit précédemment, pour la réalisation d'un élément moulé, notamment un bloc de construction, caractérisé par un temps de démoulage compris entre 1 et 7 jours et une résistance à la compression supérieure à 2 MPa à 14 jours.

Selon une variante il est possible de raccourcir le temps de démoulage si, par exemple, le mélange hydraulique est étuvé. Le temps de démoulage peut alors être compris dans un intervalle choisi parmi 1 à 24 heures, notamment 2 à 12 heures, préférentiellement 2 à 8 heures.

Selon un autre mode de réalisation préféré la présente invention a pour objet l'utilisation d'un mélange hydraulique tel que décrit précédemment, pour la réalisation d'éléments moulés tel que décrits précédemment et caractérisés par une masse volumique sèche, à 28 jours, inférieure à 1200kg/m³, notamment inférieure à 1000kg/m³, préférentiellement inférieure à 800kg/m³.

### Matériels et méthodes

### Matériaux utilisés

### Granulats végétaux

Les granulats végétaux sont des Granulats Technichanvre® réf C020 (Sté Technichanvre - BP 3 - 29340 RIEC sur BELON) constitués à 100 % de Chènevotte. Le granulat a une longueur de 20 à 25 mm, une masse volumique à l'état sec de 110 kg/m³.

### Granulats minéraux

Le granulat minéral utilisé dans les exemples est constitué de quatre éléments ayant des fractions granulométriques différentes : un filler siliceux Millisil C4 commercialisé par la société Sifraco (D10 = 177 µm, D50 = 64 µm, D90 = 8,8 µm) et trois sables commercialisés par la société Palvadeau de granulométries : 0 à 0,315 mm ; 0,315 mm à 1 mm et 1 à 4 mm.

Les proportions relatives (en masse) de ces quatre éléments constitutifs du granulat minéral sont indiquées dans le tableau 1.

**Tableau 1**

| | |
|---|---|
| Millisil C4 | 7,9 % |
| Palvadeau 0/0,315 mm | 14,4 % |
| Palvadeau 0,315/1 mm | 13,6 % |
| Palvadeau 1/4 mm | 64,1 % |

### Ciments

- Le ciment de type Portland utilisé est un CEM I 52.5 R, provenant de l'usine de Couvrot (France).
- Le ciment sulfo alumineux utilisé provient de l'usine de Guardiaregia (Italie).

Le tableau 2 regroupe les principales phases minéralogiques de ces ciments (% massiques)

**Tableau 2**

| **Usine de production** | **C3A** | **C3S** | **C2S** | **SO3** | **C4A3$** | **C12A7** | **C$** |
|---|---|---|---|---|---|---|---|
| **Couvrot** | 11 | 66 | 13 | 3,7 | - | - | - |
| **Guardiaregia** | - | - | 10,4 | - | 64,2 | 2,4 | 2,9 |

Le nom des différentes phases minéralogiques est rappelé ci-après :
- C3A :: Aluminate tricalcique **3CaO, Al₂O₃** ou **Ca₃Al₂O₆**
- C3S :: Silicate tricalcique (Alite) **3CaO, SiO₂** ou **Ca₃SiO₅**
- C2S :: Silicate bicalcique (Belite) **2CaO**, **SiO₂** ou **Ca₂SiO₄**
- SO₃:: Soufre
- C4A3$:: Sulfoaluminate de calcium (Yeelimite) **Ca₄(AlO₂)₆SO₄**
- C12A7 :: Dodecacalcium hepta-aluminate **12CaO,7Al₂O₃**
- C$ :: Anhydrite **CaSO₄**

### Méthode

Tous les essais ont été réalisés à 20±2 °C, selon le protocole suivant :
L'ensemble des constituants est pesé préalablement à la gâchée.
Un malaxeur de type boulanger est utilisé pour la préparation de la gâchée.
Les phases d'introduction et de mélange sont les suivantes :
- Introduction du sable et des fibres végétales.
- Introduction de l'eau de pré-humidification.
- Mélange pendant 1 minute.
- Arrêt du malaxage et repos des granulats et des fibres imbibés pendant 10 minutes.
- Introduction des ciments.
- Malaxage pendant 3 minutes comprenant les phases suivantes :
   - 30 s de malaxage « à sec » des ciments et des matériaux pré-humidifiés,
   - Ajout de l'eau restante pendant environ 30 s,
   - Malaxage après ajout de l'eau pendant 2 min.

Les tests de caractérisations ont ensuite été réalisés sur ces mortiers.

### Caractérisations

### Tests de résistance à la compression sur éprouvettes cubiques de 10 cm d'arête selon la norme NF EN 12390-3

Les éprouvettes sont confectionnées à 20 ±2 °C. Elles sont conservées dans leur moules à l'air jusqu'à ce que leur résistance permette le démoulage (entre 24 h et 96h généralement). Les éprouvettes sont alors démoulées puis conservées dans l'eau à température de 20 ±2 °C jusqu'au moment de l'essai.
Les résistances à la compression (Rc) sont indiquées en MPa (ou N/mm²), à 14, 28 ou 84 jours, après la fin du malaxage de l'échantillon.

### Masses volumiques

La masse volumique du mélange hydraulique à l'état frais en kg/m³ est mesurée selon la norme NF EN 12350-6 dans un récipient de volume 8 L : par « à l'état frais » on entend à la fin du malaxage avec l'eau, avant le début de la prise.
Les masses volumiques du béton ou du mortier sont mesurées en kg/m³, à l'état durci, avant séchage et à l'état sec :
Par « avant séchage» on entend l'échantillon tel quel, essuyé en surface pour retirer l'eau.
Par « à l'état sec» on entend l'état obtenu par un séchage à l'étuve de 80 ± 5 °C, jusqu'à masse constante. La masse est réputée constante lorsque deux pesées successives réalisées à 24 h d'écart, avec conservation dans l'étuve, ne diffèrent pas de plus de 0,05 % entre elles (après refroidissement à 20 ± 2 °C durant au moins 3 h avant pesée).

### Affaissement

L'affaissement est mesuré au cône d'Abrams selon la norme NF EN 12350-2. Les valeurs d'affaissement sont indiquées en millimètres.

### EXEMPLES

### Exemples 1 à 3

Les échantillons n°1, 2 et 3 (présentés dans le tableau 3) sont des exemples de compositions ne contenant pas de granulats minéraux, c'est-à-dire des compositions dont l'intégralité des granulats est constituée de granulats d'origine végétale.

Le rapport massique entre le mélange de granulats (granulat uniquement végétal dans le cas des échantillons 1 à 3) et le liant minéral (ciment Portland plus ciment sulfo-alumineux) est de 0,55.

Les proportions des différents constituants de ces échantillons sont indiquées dans le tableau 3.

**Tableau 3**

| **Echantillon** | **N°1** | **N°2** | **N°3** |
|---|---|---|---|
| Granulat végétal | 110 kg | 110 kg | 110 kg |
| Granulats minéraux | 0 kg | 0 kg | 0 kg |
| Ciment Portland | 100 kg | 50 kg | 20 kg |
| Ciment Sulfo-alumineux | 100 kg | 150 kg | 180 kg |
| Eau | 200 kg | 200 kg | 200 kg |

Dans les échantillons n°1, 2 et 3 (présentés dans le tableau 3), la masse totale de liant hydraulique reste identique, mais les proportions des ciments Portland et sulfo-alumineux varient.

Les caractéristiques mécaniques des échantillons 1 à 3 sont indiquées dans le tableau 4.

**Tableau 4**

| **Echantillon** | **N°1** | **N°2** | **N°3** |
|---|---|---|---|
| Rc 14 jours | 1,2 MPa | 1,4 MPa | 1,6 MPa |
| Rc 28 jours | 1,6 MPa | 1,9 MPa | - |
| Rc 84 jours | - | - | 2,8 MPa |
| Masse volumique à l'état frais | 745 kg/m³ | 718 kg/m³ | 756 kg/m³ |
| Masse vol. avant séchage (14 jours) | 595 kg/m³ | 707 kg/m³ | 697 kg/m³ |
| Masse vol. avant séchage (28 jours) | 594 kg/m³ | 644 kg/m³ | 592 kg/m³ |
| Masse vol. sèche (14 jours) | 457 kg/m³ | 475 kg/m³ | 500 kg/m³ |
| Masse vol. sèche (28 jours) | 468 kg/m³ | 500 kg/m³ | 499 kg/m³ |
| Affaissement | 0 mm | 0 mm | 10 mm |

On observe que les résistances à la compression augmentent lorsque la proportion de ciment sulfo-alumineux augmente.

### Exemples 4 à 6

Les échantillons n° 4, 5 et 6 (présentés dans le tableau 5) sont des exemples de compositions contenant 208,5 kg de granulats minéraux, le rapport massique entre les granulats d'origine végétale et les granulats d'origine minérale est de 0,48.

Le rapport massique entre le mélange de granulats (végétal plus minéral) et le liant minéral (ciment Portland plus ciment sulfo-alumineux) est de 1,54.

Les proportions des différents constituants de ces échantillons sont indiquées dans le tableau 5.

**Tableau 5**

| **Echantillon** | **N°4** | **N°5** | **N°6** |
|---|---|---|---|
| Granulat végétal | 100 kg | 100 kg | 100 kg |
| Granulats minéraux | 208,5 kg | 208,5 kg | 208,5 kg |
| Ciment Portland | 100 kg | 50 kg | 20 kg |
| Ciment Sulfo alumineux | 100 kg | 150 kg | 180 kg |
| Eau | 210 kg | 190 kg | 190 kg |

Dans les échantillons n°4, 5 et 6 (présentés dans le tableau 5), la masse totale de liant hydraulique reste identique, mais les proportions des ciments Portland et sulfo-alumineux varient. Les caractéristiques mécaniques des échantillons 4 à 6 sont indiquées dans le tableau 6.

**Tableau 6**

| **Echantillon** | **N°4** | **N°5** | **N°6** |
|---|---|---|---|
| Rc 14 jours | 2,4 MPa | 2,2 MPa | 1,3 MPa |
| Rc 28 jours | 3 MPa | 3,4 MPa | - |
| Rc 84 jours | - | - | 2,7 MPa |
| Masse volumique à l'état frais | 1084 kg/m³ | 1001 kg/m³ | 907 kg/m³ |
| Masse vol. avant séchage (14 j) | 964 kg/m³ | 977 kg/m³ | 872 kg/m³ |
| Masse vol. avant séchage (28 j) | - | 887 kg/m³ | 779 kg/m³ |
| Masse vol. sèche (14 jours) | 818 kg/m³ | 773 kg/m³ | 687 kg/m³ |
| Masse vol. sèche (28 jours) | 787 kg/m³ | 766 kg/m³ | 696 kg/m³ |
| Affaissement | 5 mm | 0 mm | 0 mm |

On observe que les résistances sont sensiblement les mêmes pour des rapports massiques entre ciments Portland et sulfo-alumineux de 0,5 et 0,75 (échantillons 4 et 5 respectivement) ; mais diminuent lorsque le rapport massique entre ciments Portland et sulfo-alumineux augmente à 0,9 (échantillon 6).

### Exemples 7 à 9

Les échantillons n°7, 8 et 9 (tableau 7) sont des exemples de compositions contenant 417,4 kg de granulats minéraux, le rapport massique entre les granulats d'origine végétale et les granulats d'origine minérale est de 0,22.

Le rapport massique entre le mélange de granulats (végétal plus minéral) et le liant minéral (ciment Portland plus ciment sulfo-alumineux) est de 2,54.

Les proportions des différents constituants de ces échantillons sont indiquées dans le tableau 7.

**Tableau 7**

| **Echantillon** | **N°7** | **N°8** | **N°9** |
|---|---|---|---|
| Granulat végétal | 90 kg | 90 kg | 90 kg |
| Granulats minéraux | 417,4 kg | 417,4 kg | 417,4 kg |
| Ciment Portland | 100 kg | 50 kg | 20 kg |
| Ciment Sulfo-alumineux | 100 kg | 150 kg | 180 kg |
| Eau | 200 kg | 180 kg | 180 kg |

Dans les échantillons n°7, 8 et 9 (tableau 7), la masse totale de liant hydraulique reste identique, mais les proportions des ciments Portland et sulfo-alumineux varient.

Les caractéristiques mécaniques des échantillons 7 à 9 sont indiquées dans le tableau 8.

**Tableau 8**

| **Echantillon** | **N°7** | **N°8** | **N°9** |
|---|---|---|---|
| Rc 14 jours | 2,4 MPa | 3 MPa | 1,8 MPa |
| Rc 28 jours | 2,5 MPa | - | - |
| Rc 84 jours | - | 5,2 MPa | 4,6 MPa |
| Masse volumique à l'état frais | 1281 kg/m³ | 1249 kg/m³ | 1214 kg/m³ |
| Masse vol. avant séchage (14 j) | 1241 kg/m³ | 1184 kg/m³ | 1140 kg/m³ |
| Masse vol. avant séchage (28 j) | 1201 kg/m³ | 1091 kg/m³ | 1086 kg/m³ |
| Masse vol. sèche (14 jours) | 1010 kg/m³ | 1033 kg/m³ | 961 kg/m³ |
| Masse vol. sèche (28 jours) | 1000 kg/m³ | 1019 kg/m³ | 988 kg/m³ |
| Affaissement | 0 mm | 10 mm | 0 mm |

On observe que l'échantillon présentant les résistances à la compression les plus avantageuses est l'échantillon 8, soit un rapport massique entre ciments Portland et sulfo-alumineux de 0,75.

Les performances mécaniques de résistance à la compression d'un matériau constitué de granulats végétaux et minéraux semblent connaitre un maximum lorsque le rapport massique entre ciments Portland et sulfo-alumineux se situe entre 0,5 et 0,9.

## Revendications

1. Mélange hydraulique pour l'obtention de béton ou mortier, contenant un liant hydraulique minéral, un mélange de granulats et de l'eau,
**caractérisé en ce que** ledit liant hydraulique minéral est un mélange comprenant du ciment Portland et du ciment sulfo-alumineux, le ciment sulfo-alumineux contenant les phases minéralogiques suivantes, exprimées en pourcentages massiques par rapport à la masse totale du liant sulfo-alumineux :
- Yeelimite, ou C4A3$, supérieure à 40 %, notamment de 50 à 90 %, préférentiellement de 60 à 70 %, et
- Bélite, ou C2S, inférieure à 40 %, notamment de 5 à 30 %, préférentiellement de 10 à 15 %.
et **en ce que** la totalité ou au moins une partie du mélange de granulats est d'origine végétale.

2. Mélange hydraulique selon la revendication 1,
**caractérisé en ce que** le rapport massique entre le ciment Portland et le ciment sulfo-alumineux est compris entre 1 et 0,1, notamment entre 0,5 et 0,1, préférentiellement entre 0,33 et 0,1.

3. Mélange hydraulique selon l'une des revendications 1 ou 2,
**caractérisé en ce que** le rapport massique de l'eau par rapport au liant hydraulique minéral est supérieur ou égal à 0,7.

4. Mélange hydraulique selon l'une quelconque des revendications précédentes,
**caractérisé en ce que** le rapport massique entre l'eau et le liant hydraulique minéral est compris entre 0,7 et 1,5, notamment entre 0,8 et 1,3, préférentiellement entre 0,9 et 1,1.

5. Mélange hydraulique selon l'une quelconque des revendications précédentes,
**caractérisé en ce que** le mélange de granulats comprend des granulats d'origine végétale et des granulats d'origine minérale, le rapport massique à l'état sec entre les granulats d'origine végétale et les granulats d'origine minérale étant compris entre 0,1 et 0,6, notamment entre 0,2 et 0,5.

6. Mélange hydraulique selon l'une quelconque des revendications précédentes,
**caractérisé en ce que** la proportion massique des granulats d'origine végétale dans la fraction solide dudit mélange est avantageusement supérieure à 10 %, de préférence supérieure à 12 %, de préférence encore supérieure à 14 %.

7. Mélange hydraulique selon l'une quelconque des revendications précédentes,
**caractérisé en ce que** le granulat d'origine végétale est sélectionné parmi des sources telles que le bois, le chanvre, le lin, le miscanthus, le sorgho, la paille, les balles de riz, ou un mélange de ceux-ci, préférentiellement le granulat d'origine végétale provient du bois, du chanvre, du miscanthus, ou d'un mélange de ceux-ci.

8. Mélange hydraulique selon l'une quelconque des revendications précédentes,
**caractérisé en ce que** le rapport massique du mélange de granulats secs par rapport au liant hydraulique minéral est supérieur ou égal à 0,5 et, de préférence inférieur ou égal à 3.

9. Mélange hydraulique selon l'une quelconque des revendications précédentes,
**caractérisé en ce que** le rapport massique entre les granulats d'origine végétale à l'état sec et le liant hydraulique minéral est compris entre 0,3 et 0,7, notamment entre 0,4 et 0,6, préférentiellement entre 0,45 et 0,55.

10. Mélange hydraulique selon l'une quelconque des revendications précédentes,
**caractérisé en ce que** le rapport massique entre les granulats d'origine végétale à l'état sec et le ciment sulfo-alumineux est compris entre 0,4 et 1,5, notamment entre 0,45 et 1,3, préférentiellement entre 0,5 et 1,1.

11. Mélange hydraulique selon l'une quelconque des revendications précédentes,
**caractérisé en ce qu'**il contient un ou plusieurs adjuvants choisi parmi les superplastifiants, les accélérateurs de prise ou de durcissement, les agents viscosants, les entraîneurs d'air.

12. Bloc béton pour construction obtenu à partir d'un mélange hydraulique selon l'une quelconque des revendications précédentes.

13. Procédé de préparation d'un béton ou d'un mortier à l'aide d'un mélange hydraulique selon l'une quelconque des revendications 1 à 11,
**caractérisé en ce qu'**il comprend les étapes successives suivantes :
1 Malaxage du mélange de granulats pour l'homogénéiser,
2) Humidification du mélange de granulats par ajout d'une partie de l'eau,
3) Ajout du liant hydraulique minéral,
4) Ajout du reste de l'eau et d'éventuels adjuvants.

14. Procédé selon la revendication 13,
**caractérisé en ce que** le volume d'eau ajouté lors de l'étape 2) est supérieur ou égal à 50 % du volume total d'eau introduit au cours du procédé.

15. Procédé selon l'une quelconque des revendications 13 ou 14,
**caractérisé en ce que** le volume d'eau ajouté lors de l'étape 4) est inférieur ou égal à 50 % du volume total d'eau introduit au cours du procédé.

16. Procédé selon l'une quelconque des revendications 13 à 15,
**caractérisé en ce que** le volume d'eau ajouté lors de l'étape 4) est supérieur ou égal à 10 % du volume total d'eau introduit au cours du procédé.

17. Utilisation d'un mélange hydraulique selon l'une quelconque des revendications 1 à 11, pour la réalisation d'un béton, ou d'un mortier, léger, isolant, contenant une partie de granulats d'origine végétale, et ayant une résistance à la compression, à 28 jours, supérieure à 1,5 MPa, notamment supérieure à 2 MPa, préférentiellement supérieure à 3 MPa.

18. Utilisation d'un mélange hydraulique selon l'une quelconque des revendications 1 à 11, pour la réalisation d'un élément moulé, notamment un bloc de construction, **caractérisé par** un temps de démoulage compris entre 1 et 7 jours et une résistance à la compression supérieure à 2 MPa à 14 jours.

19. Utilisation d'un mélange hydraulique selon l'une quelconque des revendications 1 à 11, pour la réalisation d'éléments moulés **caractérisés par** une masse volumique sèche, à 28 jours, inférieure à 1200 kg/m³, notamment inférieure à 1000 kg/m³, préférentiellement inférieure à 800 kg/m³.

## Patentansprüche

1. Hydraulische Mischung zur Herstellung von Beton oder Mörtel, enthaltend ein mineralisches hydraulisches Bindemittel, ein Gemisch aus Granulaten und aus Wasser,
**dadurch gekennzeichnet, dass** das mineralische hydraulische Bindemittel ein Gemisch ist, das Portland-Zement und Sulfoaluminat-Zement umfasst, wobei der Sulfoaluminat-Zement die folgenden mineralogischen Phasen enthält, ausgedrückt in Massenanteilen im Verhältnis zur Gesamtmasse des Sulfoaluminat-Bindemittels:
- Yeelimite, oder C4A3$, über 40 %, insbesondere 50 bis 90 %, vorzugsweise 60 bis 70 %, und
- Belite, oder C2S, unter 40 %, insbesondere 5 bis 30 %, vorzugsweise 10 bis 15 %,
und dass die Gesamtheit oder mindestens ein Teil des Granulatgemischs pflanzlichen Ursprungs ist.

2. Hydraulische Mischung nach Anspruch 1,
**dadurch gekennzeichnet, dass** das Massenverhältnis zwischen dem Portland-Zement und dem Sulfoaluminat-Zement zwischen 1 und 0,1, insbesondere zwischen 0,5 und 0,1, vorzugsweise zwischen 0,33 und 0,1, inklusive ist.

3. Hydraulische Mischung nach einem der Ansprüche 1 oder 2,
**dadurch gekennzeichnet, dass** das Massenverhältnis von Wasser im Verhältnis zum mineralischen hydraulischen Bindemittel größer oder gleich 0,7 ist.

4. Hydraulische Mischung nach einem der vorangehenden Ansprüche,
**dadurch gekennzeichnet, dass** das Massenverhältnis zwischen dem Wasser und dem mineralischen hydraulischen Bindemittel zwischen 0,7 und 1,5, insbesondere zwischen 0,8 und 1,3, vorzugsweise zwischen 0,9 und 1,1, inklusive ist.

5. Hydraulische Mischung nach einem der vorangehenden Ansprüche,
**dadurch gekennzeichnet, dass** das Granulatgemisch Granulate pflanzlichen Ursprungs und Granulate mineralischen Ursprungs umfasst, wobei das Massenverhältnis im trockenen Zustand zwischen den Granulaten pflanzlichen Ursprungs und den Granulaten mineralischen Ursprungs zwischen 0,1 und 0,6, insbesondere zwischen 0,2 und 0,5, inklusive ist.

6. Hydraulische Mischung nach einem der vorangehenden Ansprüche,
**dadurch gekennzeichnet, dass** der Massenanteil der Granulate pflanzlichen Ursprungs in der festen Fraktion des Gemischs in vorteilhafter Weise über 10 %, vorzugsweise über 12 %, noch vorzugsweiser über 14 %, beträgt.

7. Hydraulische Mischung nach einem der vorangehenden Ansprüche,
**dadurch gekennzeichnet, dass** das Granulat pflanzlichen Ursprungs aus den Quellen wie Holz, Hanf, Leinen, Miscanthus, Sorgho, Stroh, Reisballen oder einem Gemisch von ihnen ausgewählt ist, wobei vorzugsweise das Granulat pflanzlichen Ursprungs vom Holz, Hanf, Miscanthus oder einem Gemisch von ihnen bereitgestellt wird.

8. Hydraulische Mischung nach einem der vorangehenden Ansprüche,
**dadurch gekennzeichnet, dass** das Massenverhältnis des trockenen Granulatgemischs im Verhältnis zum mineralischen hydraulischen Bindemittel größer oder gleich 0,5 und vorzugsweise kleiner oder gleich 3 ist.

9. Hydraulische Mischung nach einem der vorangehenden Ansprüche,
**dadurch gekennzeichnet, dass** das Massenverhältnis zwischen den Granulaten pflanzlichen Ursprungs im trockenen Zustand und dem mineralischen hydraulischen Bindemittel zwischen 0,3 und 0,7, insbesondere zwischen 0,4 und 0,6, vorzugsweise zwischen 0,45 und 0,55, inklusive ist.

10. Hydraulische Mischung nach einem der vorangehenden Ansprüche,
**dadurch gekennzeichnet, dass** das Massenverhältnis zwischen den Granulaten pflanzlichen Ursprungs im trockenen Zustand und dem Sulfoaluminat-Zement zwischen 0,4 und 1,5, insbesondere zwischen 0,45 und 1,3, vorzugsweise zwischen 0,5 und 1,1, inklusive ist.

11. Hydraulische Mischung nach einem der vorangehenden Ansprüche,
**dadurch gekennzeichnet, dass** sie einen oder mehrere Zuschlagstoffe enthält, die aus den Superweichmachern, den Abbinde- oder Härtungsbeschleunigern, den Viskosiermitteln, den Luftporenbildnern ausgewählt sind.

12. Betonblock zum Bauen, erhalten aus einer hydraulischen Mischung nach einem der vorangehenden Ansprüche.

13. Herstellungsverfahren eines Betons oder eines Mörtels mit Hilfe einer hydraulischen Mischung nach einem der Ansprüche 1 bis 11,
**dadurch gekennzeichnet, dass** es die folgenden aufeinanderfolgenden Schritte umfasst:
1) Mischen des Granulatgemischs zwecks Homogenisieren,
2) Befeuchten des Granulatgemischs durch Hinzufügen eines Teils des Wassers,
3) Hinzufügen des mineralischen hydraulischen Bindemittels,
4) Hinzufügen des restlichen Wassers und eventueller Zuschlagstoffe.

14. Verfahren nach Anspruch 13,
**dadurch gekennzeichnet, dass** das bei Schritt 2) hinzugefügte Wasservolumen größer oder gleich 50 % des Gesamtwasservolumens ist, das während des Verfahrens eingesetzt wird.

15. Verfahren nach einem der Ansprüche 13 oder 14,
**dadurch gekennzeichnet, dass** das bei Schritt 4) hinzugefügte Wasservolumen kleiner oder gleich 50 % des Gesamtwasservolumens ist, das während des Verfahrens eingesetzt wird.

16. Verfahren nach einem der Ansprüche 13 bis 15,
**dadurch gekennzeichnet, dass** das bei Schritt 4) hinzugefügte Wasservolumen größer oder gleich 10 % des Gesamtwasservolumens ist, das während des Verfahrens eingesetzt wird.

17. Verwendung einer hydraulischen Mischung nach einem der Ansprüche 1 bis 11 für die Herstellung eines leichten, isolierenden Betons oder Mörtels, enthaltend eine Teil Granulate pflanzlichen Ursprungs, mit einer Kompressionsfestigkeit nach 28 Tagen über 1,5 MPa, insbesondere über 2 MPa, vorzugsweise über 3 MPa.

18. Verwendung einer hydraulischen Mischung nach einem der Ansprüche 1 bis 11 für die Herstellung eines geformten Elements, insbesondere eines Konstruktionsblocks,
**gekennzeichnet durch** eine Entformungszeit zwischen 1 und 7 Tagen inklusive und einer Kompressionsfestigkeit über 2 MPa nach 14 Tagen.

19. Verwendung einer hydraulischen Mischung nach einem der Ansprüche 1 bis 11 für die Herstellung von geformten Elementen, **gekennzeichnet durch** eine trockene Volumenmasse nach 28 Tagen unter 1200 kg/m³, insbesondere unter 1000 kg/m³, vorzugsweise unter 800 kg/m³.

## Claims

1. A hydraulic mixture to obtain concrete or mortar, containing a mineral hydraulic binder, an aggregate mixture and water,
**characterized in that** said mineral hydraulic binder is a mixture comprising Portland cement and calcium sulfoaluminate cement, the calcium sulfoaluminate cement containing the following mineralogical phases expressed in weight percent relative to the total weight of the sulfoaluminate binder:
- Ye'elimite, or C4A3$, higher than 40 %, in particular from 50 to 90 %, preferably 60 to 70 %, and
- Belite, or C2S, lower than 40 %, in particular from 5 to 30 %, preferably 10 to 15 %,
and **in that** the entirety or at least part of the aggregate mixture is of plant origin.

2. The hydraulic mixture according to claim 1, **characterized in that** the weight ratio of Portland cement to calcium sulfoaluminate cement is between 1 and 0.1, in particular between 0.5 and 0.1, preferably between 0.33 and 0.1.

3. The hydraulic mixture according to one of claims 1 or 2, **characterized in that** the weight ratio of water relative to the mineral hydraulic binder is 0.7 or higher.

4. The hydraulic mixture according to any of the preceding claims, **characterized in that** the weight ratio of water relative to the mineral hydraulic binder is between 0.7 and 1.5, in particular between 0.8 and 1.3, preferably between 0.9 and 1.1

5. The hydraulic mixture according to any of the preceding claims, **characterized in that** the aggregate mixture comprises aggregate of plant origin and aggregate of mineral origin, the weight ratio in the dry state between aggregate of plant origin and aggregate of mineral origin being between 0.1 and 0.6, in particular between 0.2 and 0.5.

6. The hydraulic mixture according to any of the preceding claims, **characterized in that** the weight proportion of aggregate of plant origin in the solid fraction of said mixture is advantageously higher than 10 %, preferably higher than 12%, further preferably higher than 14 %.

7. The hydraulic mixture according to any of the preceding claims, **characterized in that** the aggregate of plant origin is selected from among sources such as wood, hemp, flax, miscanthus, sorghum, straw, rice husk or a mixture thereof, preferably the aggregate of plant origin is derived from wood, hemp, miscanthus or a mixture thereof.

8. The hydraulic mixture according to any of the preceding claims, **characterized in that** the weight ratio of the mixture of dry aggregate relative to the mineral hydraulic binder is 0.5 or higher, and preferably 3 or lower.

9. The hydraulic mixture according to any of the preceding claims, **characterized in that** the weight ratio between the aggregate of plant origin in the dry state and the mineral hydraulic binder is between 0.3 and 7, in particular between 0.4 and 0.6, preferably between 0.45 and 0.55.

10. The hydraulic mixture according to any of the preceding claims, **characterized in that** the weight ratio between the aggregate of plant origin in the dry state and the calcium sulfoaluminate cement is between 0.4 and 1.5, in particular between 0.45 and 1.3, preferably between 0.5 and 1.1.

11. The hydraulic mixture according to any of the preceding claims, **characterized in that** it contains one of more admixtures selected from among superplasticizers, setting or hardening accelerators, viscosifying and air-entraining agents.

12. A concrete building block obtained from a hydraulic mixture according to any of the preceding claims.

13. A method to prepare concrete or mortar using a hydraulic mixture according to any of claims 1 to 11, **characterized in that** it comprises the following successive steps:
1) Mixing the aggregate mixture for homogenization thereof.
2) Wetting the aggregate mixture by adding part of the water.
3) Adding the mineral hydraulic binder.
4) Adding the remainder of water and optional admixtures.

14. The method according to claim 13, **characterized in that** the volume of water added at step 2) is 50 % or more of the total volume of water added throughout the method.

15. The method according to either of claims 13 or 14, **characterized in that** the volume of water added at step 4) is 50 % or less of the total volume of water added throughout the method.

16. The method according to any of claims 13 to 15, **characterized in that** the volume of water added at step 4) is 10 % or more of the total volume of water added throughout the method.

17. The use of a hydraulic mixture according to any of claims 1 to 11, to prepare lightweight, insulating concrete or mortar containing aggregate that is partly of plant origin, and having a compressive strength at 28 days higher than 1.5 MPa, in particular higher than 2 MPa, preferably higher than 3 MPa.

18. The use of a hydraulic mixture according to any of claims 1 to 11, to prepare a moulded element, in particular a building block, **characterized by** a mould release time of between 1 and 7 days and a compressive strength higher than 2 MPa at 14 days.

19. The use of a hydraulic mixture according to any of claims 1 to 11 to prepare moulded elements, **characterized by** a dry density at 28 days of less than 1200 kg/m³, in particular less than 1000 kg/m³, preferably less than 800 kg/m³.
